**Europäisches Patentamt**

**European Patent Office**

**Office européen des brevets**

(19)

(11) Numéro de publication: **0 128 803**
**B1**

(12) **FASCICULE DE BREVET EUROPEEN**

(45) Date de publication du fascicule du brevet:
**07.01.88**

(21) Numéro de dépôt: **84401076.9**

(22) Date de dépôt: **24.05.84**

(51) Int. Cl.⁴: **C 09 D 9/00, C 11 D 9/00**

(54) **Procédé de traitement de surface.**

(30) Priorité: **26.05.83 FR 8308740**

(43) Date de publication de la demande:
**19.12.84 Bulletin 84/51**

(45) Mention de la délivrance du brevet:
**07.01.88 Bulletin 88/1**

(84) Etats contractants désignés:
**AT BE CH DE FR GB IT LI LU NL SE**

(56) Documents cités:
**BE - A - 499 286**
**CH - A - 368 268**
**GB - A - 1 066 407**
**US - A - 1 993 096**

(73) Titulaire: **Salkin, André, 134 avenue du 14 juillet,**
**F-76300 Sotteville les Rouen (FR)**

(72) Inventeur: **Salkin, André, 134 avenue du 14 juillet,**
**F-76300 Sotteville les Rouen (FR)**

(74) Mandataire: **Derambure, Christian et al, Cabinet**
**BUGNION ASSOCIES SARL 116, boulevard Haussmann,**
**F-75008 Paris (FR)**

## Description

L'invention concerne un procédé de traitement de surface.

On sait que pour effectuer le nettoyage de diverses surfaces et divers matériels, on utilise des mélanges d'agents nettoyants connus habituellement sous l'appelation «détergent».

Ces dernières formules, le plus souvent en milieu aqueux, peuvent contenir des tensio-actifs anioniques, non ioniques, cationiques, amphrotères, des alcalis, des agents de finition brillanteurs, cires, acides gras, silicones, des agents bactériostatiques et/ou bactéricides, des épaississants tels que la carboxyméthylcellulose.

On utilise en général les produits tels que ci-dessus mentionés, par application en pulvérisation, tiempage, à l'aide d'un seau ou d'une brosse, d'une pompe à pression ou à vapeur, à froid ou à chaud.

Il est recommandé de ne pas laisser sécher la solution sur les surfaces.

On connaît aussi des mousses contenant des tensio-actifs cationiques qui sont pulvérisées sur la surface à nettoyer et qui restent plus ou moins longtemps sur celle-ci puis sont enlevées avec les particules de saleté, par rinçage. Les mousses ont un volume important et contiennent des bulles d'air emprisonnées.

Cependant, les solutions et les mousses mentionnées plus haut peuvent avoir une action insuffisante pour certaines applications comme le nettoyage des colonnes de cheminées par exemple et si elles ne sont pas rincées dans les délais prescrits l'opération de nettoyage devra être recommencée pour obtenir un résultat optimum.

On connaît le brevet anglais No 1 066 407 qui concerne des compositions de nettoyage qui contiennent des tensio-actifs, des acides gras, des alcanolamines, les tensio-actifs étant dans une quantité au moins double de celle des acides gras.

On connaît également le brevet belge No 499 286 qui décrit un décapant très fort pour vernis appliqué sur le bois n'attaquant pas ce dernier. Il s'agit donc d'attaquer une peinture.

L'invention vise à fournir un procédé de traitement de surface.

A cet effet, l'invention propose un procédé de traitement d'une surface au moyen d'une solution aqueuse contenant un savon et au moins un des additifs suivants: le butyl-glycol, un métasilicate, un carbonate, l'éthylène diamine tétracétrate, la tri-éthanol amine, des tensio-actifs, des ammoniums quaternaires, du chlore, des dérivés chlorés, la quantité en % en poids de savon étant supérieure à la quantité en % en poids des autres constituants de la solution, caractérisé par le fait qu'on effectue un revêtement sur cette surface, on évapore l'eau pour former une couche mince de savon solide sur la surface et finalement on reliquéfie la couche mince par de l'eau pour faire disparaître le couche mince.

L'avantage de l'invention est que la couche mince formant le revêtement est constituée d'un savon solide. Contrairement aux solutions utilisées selon la technique antérieure, le savon est utilisé en solution sèche sur la surface à traiter. On un film sur la surface du savon pour obtenir une absorption ionique. Cet effet technique permet de capter des ions qui sont situés sur la surface, par exemple des ions silicium ou calcium.

De préférence on effectue le revêtement par projection ou pulvérisation de la solution ou par trempage dans un bain, à chaud ou à froid, on évapore l'eau pendant 1 minute à 12 heures, par exemple à température ambiante et on reliquéfie la couche mince par projection d'eau trempage dans de l'eau ou projection de vapeur sur la surface revetue.

La solution aqueuse a un pH préférentiellement compris entre 7 et 14.

Le savon est est ester d'acide gras et d'une base organique ou minérale.

La description suivante, en regard des exemples annexés permettra de comprendre comment l'invention peut être mise en pratique.

Exemple 1
On prépare la solution suivante:

2,5% d'oléine
2,5% de KOH
3% de tensio-actifs
0,5% d'EDTA
0,5% d'un métasilicate
0,2% de butyl-glycol, le reste étant de l'eau

On pulvérise cette solution sur une surface à nettoyer. On laisse sécher pendant 12 heures. Puis on rince à l'eau, sans frotter. La surface à nettoyer est pratiquement exempte de salissures.

Exemple 2
On prépare la solution suivante:

10% du prémélange      75% oléine
                       25% KOH
2% d'acétate de butyle
2% de butyl-glycol
2% de tensio-actifs
0,5% de métasilicate le reste étant de l'eau

On trempe la surface à nettoyer dans un bain contenant cette solution. Puis on égoutte et on fait sécher pendant 30 minutes, à 30°C.

On rince ensuite la surface à l'eau, sans frotter.

Le procédé selon l'invention permet le nettoyage des surfaces peut accessibles telles que des colonnes de cheminées, de vide ordures, tuyauteries, ou des coques de véhicules automobiles, de bateaux, des façades de bâtiments, des matériels hospitaliers, des fumoirs de l'industrie de salaison

## Revendications

1) Procédé de traitement d'une surface au moyen d'une solution aqueuse contenant un savon et au moins un des additifs suivants: le butyl-glycol, un métasilicate, un carbonate, l'éthylène diamine tétracétrate, la tri-éthanol amine, des tensio-actifs, des ammoniums quaternaires, du chlore, des dérivés chlorés, la quantité en % en poids de savon étant supérieure à la quantité en % en poids des autres constituants de la solution, caractérisé par le fait qu'on effectue un revêtement sur cette surface, on évapore l'eau pour former une couche mince de savon solide sur la surface et finalement on reliquéfie la couche mince par de l'eau pour faire disparaître la couche mince.

2) Procédé selon la revendication 1, caractérisé par le fait qu'on évapore l'eau à température ambiante.

3) Procédé selon l'une quelconque des revendications 1 et 2, caractérisé par le fait qu'on effectue le revêtement par projection, pulvérisation de la solution ou par trempage dans un bain, à chaud ou à froid.

4) Procédé selon l'une quelconque des revendications 1 à 3, caractérisé par le fait qu'on évapore l'eau pendant 1 minute à 12 heures.

5) Procédé selon l'une quelconque des revendications 1 à 4, caractérisé par le fait qu'on reliquéfie la couche mince par projection d'eau ou de vapeur sur la surface revêtue.

6) Procédé selon l'une quelconque des revendications 1 à 5, caractérisé par le fait que la solution aqueuse a un pH compris entre 7 et 14.

## Claims

1. Method of treatment of a surface by means of an aqueous solution containing a soap and at least one of the following additives: butyl-glycol, a metasilicate, a carbonate, ethylene diamine tetracetrate, tri-ethanol amine, surface actives, quantenary ammoniums, chlorine, chlorine derivatives, the percentage by weight of soap being greater than the percentage by weight of the other constituents of the solution, characterised in that the surface is coated, the water is evaporated in order to form a thin layer of solid soap on the surface and finally the thin layer is re-liquified by the application of water in order to remove it.

2. Method according to claim 1, characterised in that the water is evaporated at ambient temperature.

3. Method according to either of claims 1 or 2, characterised in that the coating is effected by projecting or spraying of the solution or by dipping in a bath, either hot or cold.

4. Method according to any one of claims 1 to 3, characterised in that the water is evaporated over a period of one minute to twelve hours.

5. Method according to any one of claims 1 to 4, characterised in that the thin layer is re-liquified by the projection of water or vapour over the covered surface.

6. Method according to any one of claims 1 to 5, characterised in that the aqueous solution has a pH value of between 7 and 14.

## Patentansprüche

1. Verfahren zur Oberflächenbehandlung mittels einer wässerigen Lösung, welche eine Seife und mindestens einen der folgenden Zusätze enthält: Butylglykol, ein Metasilikat, ein Carbonat, ein Äthylendiamin Tetracetrat, Triäthanolamin, grenzflächenaktive Stoffe, quaternäres Ammonium, Chlor, Chlorderivate, wobei die Menge der Seife in Gewichtsprozent höher ist als die Menge der übrigen Bestandteile der Lösung in Gewichtsprozent, dadurch gekennzeichnet, dass auf diese Oberfläche ein Überzug aufgebracht wird, dass das Wasser verdunstet wird, um eine dünne, feste Seifenschicht zu erhalten, und dass schliesslich die dünne Schicht mit Wasser wieder verflüssigt wird, um die dünne Schicht verschwinden zu lassen.

2. Verfahren nach Anspruch 1, dadurch gekennzeichnet, dass das Wasser bei Umgebungstemperatur verdunstet wird.

3. Verfahren nach einem der Ansprüche 1 und 2, dadurch gekennzeichnet, dass der Überzug durch Spritzen, Zerstäuben der Lösung oder durch Eintauchen in ein Bad in warmen oder kaltem Zustand ausgeführt wird.

4. Verfahren nach einem der Ansprüche 1–3, dadurch gekennzeichnet, dass das Wasser während 1 Minute bis 12 Stunden verdunstet wird.

5. Verfahren nach einem der Ansprüche 1–4, dadurch gekennzeichnet, dass die dünne Schicht durch Aufspritzen von Wasser oder Dampf auf die beschichtete Oberfläche wieder verflüssigt wird.

6. Verfahren nach einem der Ansprüche 1–5, dadurch gekennzeichnet, dass die wässerige Lösung einen pH-Wert zwischen 7 und 14 hat.